# EUROPEAN PATENT SPECIFICATION

(11) **EP 1 505 744 B1**
(45) Date of publication and mention of the grant of the patent: **20.07.2011**
(21) Application number: 03725784.7
(22) Date of filing: 15.05.2003
(51) Int. Cl.: H04B 7/04, H04B 17/00

(54) **ADAPTIVE ANTENNA TRANSMISSION APPARATUS, AND BASE STATION APPARATUS USING THE SAME**
ADAPTIVE ANTENNENÜBERTRAGUNGSVORRICHTUNG UND BASISSTATIONSVORRICHTUNG DAMIT
DISPOSITIF DE TRANSMISSION A ANTENNE ADAPTATIVE ET APPAREIL DE STATION DE BASE AINSI EQUIPE

(30) Priority: 15.05.2002 JP 2002139376
(43) Date of publication of application: 09.02.2005
(73) Proprietor: NEC Corporation, Minato-ku, Tokyo 108-8001 (JP)
(72) Inventor: TAKAI, Kenichi c/o NEC Corporation, Minato-ku, Tokyo 108-0014 (JP)
(74) Representative: Glawe, Delfs, Moll
(86) International application number: PCT/JP2003/006066
(87) International publication number: WO 2003/098839

(56) References cited:
- JP-A- 2000 106 539
- JP-A- 2000 106 539
- JP-A- 2000 224 097
- JP-A- 2000 224 097
- JP-A- 2001 285 162
- JP-A- 2001 339 331
- JP-A- 2002 077 015

## Description

### Technical Field

The present invention relates to an adaptive antenna transmission apparatus according to the preamble of claim 1, which is more particularly, applicable to a base station apparatus in a cellular communication system using a CDMA system, and which transmits transmission signals by a plurality of antenna elements constituting an adaptive antenna.

### Background Art

Such an adaptive antenna transmission apparatus is known from JP 2000 106539 A.

A CDMA (Code Division Multiple Access) system, compared to a conventional FDMA (Frequency Division Multiple Access) system and a TDMA (Time Division Multiple Access) system, is attracting attention as a radio transfer system that can vastly increase subscriber capacity. In a mobile communication system, an area capable of service by one base station is called a cell and it is common to use a method in which a plurality of base station is arranged so that mutual cells thereof may overlap, giving a wide area covered by a plurality of cells. This type of system is called a cellular system. In a CDMA system, allocating a different spreading code to each communication part prevents communication interference between users.

However, since this spreading code does not exist infinitely, it will be used up sometime. In reality, there is an advantage that the same spreading code can be reused between cells that are considerably separated, by using the said cell system.

On the other hand, there is also a disadvantage in using this cell system. As described above, in case the base station is arranged, it is common to arrange the cells to overlap little by little, in order not to occur a region being out of service inside the area. However, in the region where the cells are overlapped, interference power increases, compared to the regions where the cells are not overlapped. In a mobile communication system using a CDMA, all communication uses the same frequency. Therefore, the radio channel capacity is greatly influenced by the interference power that each communication receives. Accordingly, the interference, which occurs by overlapping the cells like this, is a cause of the decrease in channel capacity.

In particular, in a mobile communication system using a W-CDMA (Wideband-CDMA) system as a third-generation mobile communication system, it is presupposed that a lot of data are transmitted in the downlink (base station transmission) direction. Therefore, compared to the uplink (base station reception), the interference of the downlink signal is a factor for greatly influencing the channel capacity as a system.

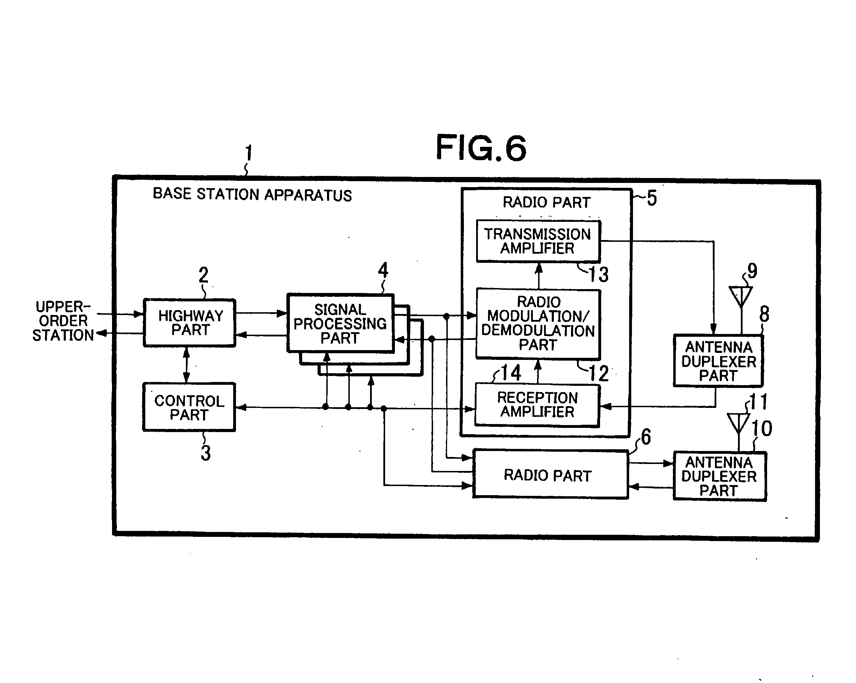

At this moment, referring to Fig. 6, an example of a functional block of a base station apparatus 1 in a cellular communication system is shown. The base station apparatus 1, as its basic structure, comprises a highway part 2, a control part 3, a signal processing part 4, radio parts 5 and 6, antenna duplexer parts 8 and 10, and antenna elements 9 and 11.

The highway part 2 has an interface function with the base-station control station of the base station apparatus. It transmits and receives control and communication data from the base-station control station. Data received from the base-station control station at the highway part 2 is sent to the signal processing part 4 and the output from this signal processing part 4 is outputted into the radio parts 5 and 6. These radio parts 5 and 6 are provided in response to antenna elements 9 and 11 constituting the adaptive antenna. In this example, two antenna elements 9 and 11 are shown, but generally the adaptive antenna is constituted of a plurality of antenna elements. Accordingly, it is clear that multiple radio parts 5 and 6 corresponding to the number of these antenna elements are provided. On the other hand, the signal processing parts 4 need not exist in response to the number of antenna elements, but the signal processing parts 4 should be connected (in other words, enabling to process all the data of the antenna elements) with all of the radio parts.

Since the radio parts 5 and 6 have the same composition, only the radio part 5 will be explained. The radio part 5 comprises a radio modulation/demodulation part 12, a transmission amplifier 13, and a reception amplifier 14. The control part 3 has a function for controlling all parts.

In this composition, an uplink radio wave from a mobile station, as not shown, is received at the antenna 9, and is inputted into the reception amplifier 14 via the antenna duplexer part 8. In the antenna duplexer part 8, transmission frequency components and reception frequency components are filtered, and transmission frequency components do not go round the reception amplifier 14. This reception amplifier 14 usually has a low noise characteristic and can amplify weak reception waves from the mobile station to a desired level so as to enable detecting those at the radio modulation/demodulation part 12.

The reception signal which are detected at the radio modulation/demodulation part 12 and whose frequency is converted to the base band is inputted into the signal processing part 4 and undergoes decoding process including error correction and the like, and communication data from the mobile station is extracted. Also, in case the received data is extracted, the signal processing part 4 is comprised to operate the optimization control so as to receive the uplink signals received from the plurality of antenna elements at higher energy (higher quality) by controlling the amplitude and phase of the received signal independent for each antenna, and to become an adaptive antenna. The received data extracted in this way is transmitted to the base-station control station via the highway part 2.

On the other hand, with respect to the downlink signal from the base station to the mobile station, the signal received from the base-station control station is separated into the base station control data and the communication data at the highway part 2, and the communication data is sent to the signal processing part 4. At the signal processing part 4, the addition of redundant bit for error correction, generation of control information based on the reception information from the mobile station and the coding process are performed in accordance with the predefined procedure complying with types of the communication data. Also, as for the downlink signal as is the case with the uplink signal, the signal processing part 4, is comprised to form the directivity of the downlink signal, by controlling the phase and amplitude of the transmitted data independent for each antenna through which data is transmitted and to become an adaptive antenna apparatus.

The output of the signal processing part 4 undergoes radio modulation and transmission power control at the radio part 5, and, is transmitted from the antenna element 9 via the antenna duplexer part 8, after being amplified to a desired transmission level (transmission power) at the transmission amplifier 13.

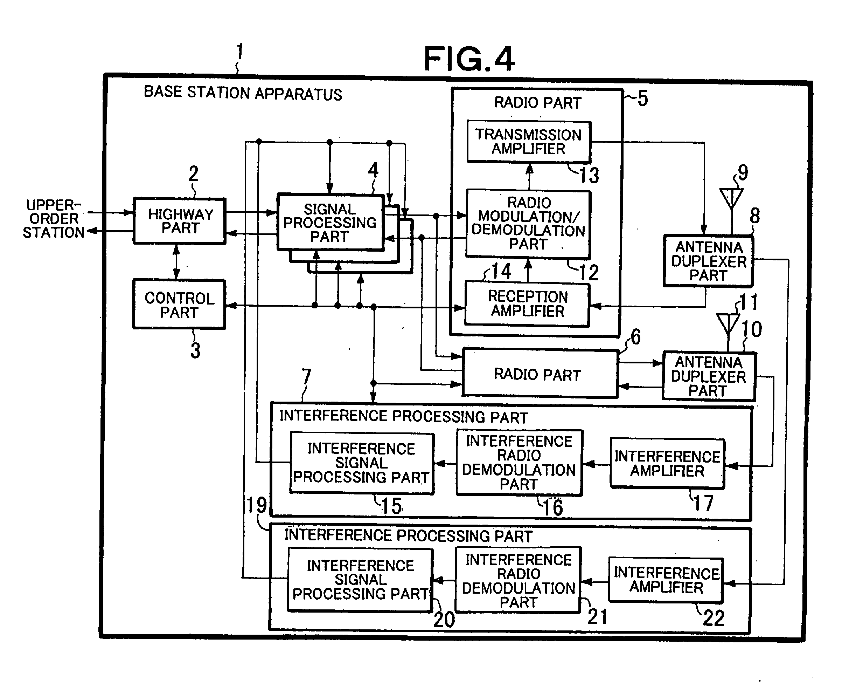

Since the radio part, the corresponding antenna duplexer part and antenna element can exist in plurality respectively, the radio part (radio part 6 in Fig. 4) other than the said radio part 5, the antenna duplexer part (antenna duplexer part 10 in Fig. 4), and the antenna element (antenna element 11 in Fig. 4) has the same operation.

The above is the general composition and operation of the base station apparatus with an adaptive antenna transmission apparatus equipped with an adaptive antenna.

In this type of the base station apparatus equipped with an adaptive antenna, interference of the downlink signal transmitted from the relevant base station apparatus greatly influences the channel capacity as a system is as mentioned above. Accordingly, this base station apparatus with said adaptive antenna composition is also requested to make the interference of this downlink signal as minimum as possible.

### Disclosure of the Invention

The present invention was made in accordance with these demands, and the object of the invention is to provide an adaptive antenna transmission apparatus that reduces the interference power of a downlink signal to prevent the system channel capacity from decreasing, and enables effective base station operation.

In order to accomplish the said object, according to the present invention, there is provided an adaptive antenna transmission apparatus transmitting transmission signals by a plurality of antenna elements constituting an adaptive antenna, comprising: an interference processing means for extracting each of interference components of the transmission signals received by each of the antenna elements; and a control means for controlling a transmission directivity formed by the plurality of antenna elements based on each of the components.

And, the control means may comprise a signal processing means for controlling amplitude and phase of each of the transmission signals corresponding to each of the antenna elements based on the each of the interference components. Also, the interference processing means may comprise an interference processing part for detecting the amplitude and phase of each of the interference components, and the signal processing means may control the amplitude and phase of each of the transmission signals so as to minimize each of the interference components.

Furthermore, the interference processing means may be provided in common with the plurality of antenna elements and perform detection process of the amplitude and phase of each of the interference components in a time division mode. Further, the interference processing means may be provided with the each of antenna elements individually. Furthermore, in the interference processing means, a radio part for radio amplification and demodulation of each of the interference components may be provided with the each of antenna elements individually, and the interference processing part for detecting the amplitude and phase based on theses demodulated powers may be provided in common with the antenna element.

The operation of the present invention is described. The base station apparatus itself detects the reflection component (interference component) of the transmission signal of the downlink signal of its own and then controls the directivity of the downlink signal in accordance with the result of this detection so as to minimize the reflection component. This enables to reduce the downlink interference power and to perform the effective operation of the base station.

The first effect according to the present invention is to enable to reduce the interference power of the downlink signal. The reason is that the relevant reflective component becomes a minimum because the base station optimizes the control of the directivity of the downlink signal, while detecting the reflection component of its own station's downlink transmission signal.

Also, the second effect according to the present invention is to enable to reduce the downlink transmission power and to perform the effective operation of the base station. The reason is that the downlink interference power can be reduced and reduction of the system channel capacity can be prevented, since the base station optimizes the control of the directivity of the transmission, while detecting the reflection component of its own station's downlink transmission signal.

### Brief Description of the Drawings

Fig. 1 is a functional block diagram of an embodiment according to the present invention;
Fig. 2 is a diagram showing a radio wave propagation state by a conventional base station apparatus;
Fig. 3 is a diagram showing a radio wave propagation state by a base station apparatus equipped with an adaptive antenna apparatus according to the present invention;
Fig. 4 is a functional block diagram showing another embodiment according to the present invention;
Fig. 5 is a is a functional block diagram showing further another embodiment according to the present invention;
Fig. 6 is a functional block diagram of a conventional base station equipped with an adaptive antenna apparatus.

### Best Mode for Carrying out the Invention

Below, an adaptive antenna apparatus relating to the embodiment according to the present invention is explained in detail using the accompanying drawings.

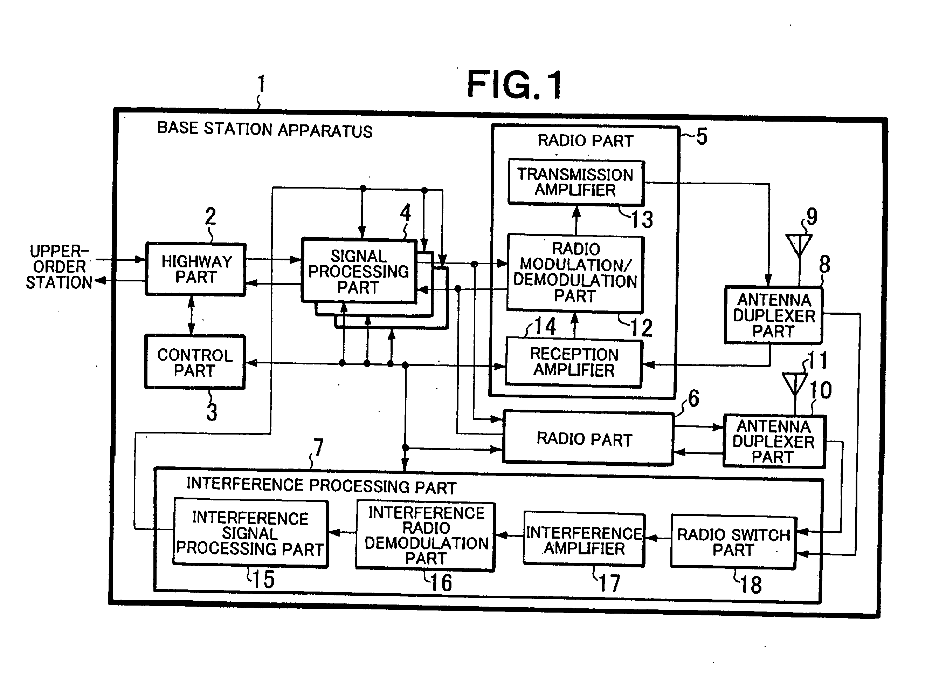

Fig. 1 shows a functional block diagram of one embodiment according to the present invention. The same parts as Fig. 6 are shown by the same symbols. In the present embodiment, describing only the parts different from the conventional example in Fig. 6. There is provided an interference processing part 7. An input terminal thereof is connected with the fourth terminal of the antenna duplexer part 8, and output terminal thereof is connected to each of signal processing parts 4 (the first terminal the antenna duplexer part 8 is connected to the transmission output terminal of the radio part 5, the second terminal thereof is connected to the reception input terminal of the radio part 5, and the third terminal thereof is connected to the antenna 9).

The interference processing part 7 is comprised of a radio switch part 18, an interference amplifier 17, an interference radio demodulation part 16, and an interference signal processing part 15. The output of this interference signal processing part 15 is fed back to the signal processing part 4. In the signal processing part 4, the directivity of the downlink signal is controlled based on the distribution information of the interference of the downlink signal obtained from this interference processing part 7.

Describing further in detail, the interference processing part 7 operates on the basis of the signal inputted from each antenna element installed in the base station 1 via the antenna duplexer part and feeds back the processing result to the signal processing part 4. At the input side of the interference processing part 7, a radio switch part 18 is provided so as to enable an input signal from a plurality of antenna duplexer parts to input alternatively (alternative input) . The signal chosen by this radio switch part 18, after being amplified under low noise at the interference amplifier 17, is inputted to the interference radio demodulation part 16. At this interference radio demodulation part 16, the interference reception component is detected, and is outputted to the interference signal processing part 15 with frequency conversion to a base band. And the output of the interference signal processing 15 is fed back to the signal processing part 4.

Here, the basic function of the interference amplifier 17, the interference radio demodulation part 16, and the interference signal processing part 15 is respectively same as that of the reception amplifier 14, the radio modulation/demodulation part 12 (mainly the demodulation part), and the signal processing part 4, as explained in Fig. 6. There is deference between Fig. 1 and Fig. 6 in that the latter applies uplink signals from the mobile station and the former applies downlink signals from the base station itself, that is components returning to the base station as a interference component of transmission signals once transmitted.

Below, the operation of each constituent element of the interference processing part is explained in detail.

Here, as an example, the case that the radio switch part chooses a signal of the antenna element 9 is explained.

The antenna duplexer part 8 has a function for outputting a signal inputted from the transmission amplifying part 13 (downlink signal) into the antenna element 9, a function for outputting a uplink signal received from the antenna element 9 into the reception amplifier 14 and a function for outputting a downlink signal received from the antenna element 9 into the radio switch part 18, and is comprised so that each of operations from input to output mutually may not interfere.

In particular, if the input signal from the transmission amplifier 13 leaks to the side of the radio switch part 18, going through the antenna element 9, there is a possibility that nonlinear characteristics come out due to saturation of the interference amplifier 17 and that the interference signal received from the antenna element 9 is lost to sight. Therefore, in order to prevent such a state, both the phase of the input signal from the transmission amplifier 13 and that of the signal propagated to the side of the radio switch part 18 via the antenna element 9 are turned over to mutually negate signals.

On the other hand, the interference component (reflection component) once transmitted from the antenna element 9 and delayed through propagating in the air is outputted to the radio switch part 18 without being negated, since having the enough differential delay from the signal outputted from the transmission amplifier 13.

In this way, any components of signals once transmitted via the antenna from the base station 1 returns to the antenna element 9 and is inputted into the interference processing part 7 via the radio switch part 18. The interference component passing the radio switch part 18 is demodulated after being amplified at the interference amplifier 17, and the reception data is extracted at the interference signal processing part 15.

The data extracted here is, in fact, the data generated at the signal processing part. If the known data such as a pilot signal preliminarily decided is used, it is available to know a differential delay (phase) and/or an energy (amplitude) difference between the data received as interference and the transmitted data.

In addition, if the same operation is sequentially carried out in a time division mode for other antenna elements such as the antenna element 11 as the access point of the radio switch part 18 is switched over, it is available to know the elements (amplitude and phase) received from each antenna element by interference of the downlink signal outputted from the base station 1.

In addition, if the information on the directivity or installation condition (direction, angle) preliminarily owned by each antenna element is inputted into the interference signal processing part 15, it is available to detect the state of distribution of the downlink interference components received at the base station.

The downlink interference signal distribution information obtained in this way is fed back to the signal processing part 4 from the interference signal processing part 15. In the signal processing part 4, the transmission directivity of the downlink signal is controlled so as to minimize the interference signal component received at the base station apparatus 1.

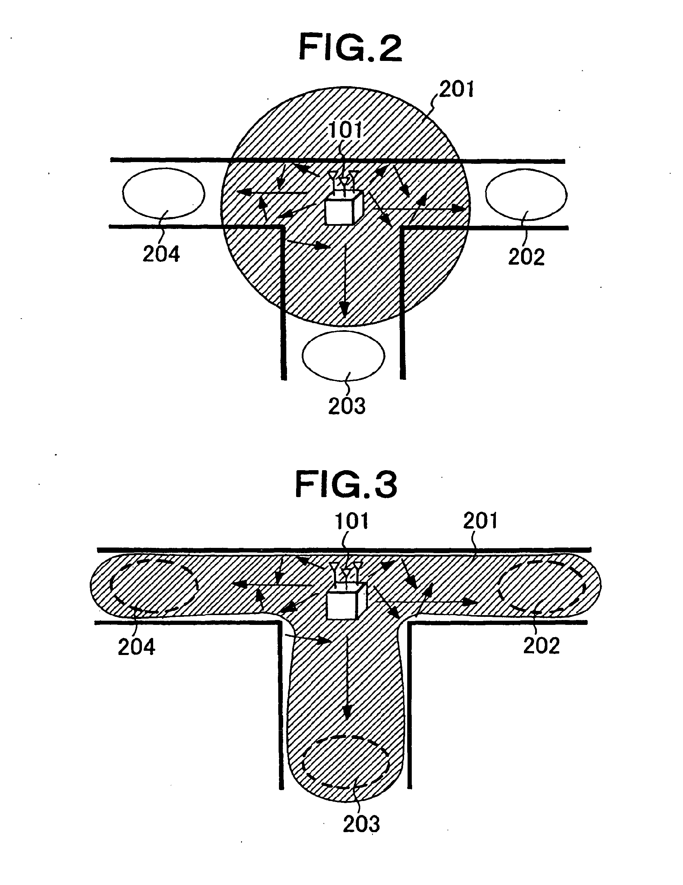

In order to explain more effectively the characteristics of the adaptive antenna apparatus according to the present invention, the operation thereof is explained, assuming the setting environment of the base station as shown in Figs. 2 and 3. In addition, the radio wave propagation state as shown in Figs. 2 and 3 is only an image and does not decide the actual area.

Fig. 2 shows the situation under which a conventional base station apparatus 101, without being equipped with the adaptive antenna apparatus according to the present invention is installed in a closed space such as an underground mall or indoors. In the conventional base station apparatus 101, since radio waves are transmitted towards a non-directional area as shown in the area 201 in the figure, the transmission waves of its own station reflected within the air in the vicinity interferes by reflection, and since the transmission direction of the waves are not always optimized so as to form the mode of the setting open space, the waves are not propagated in the wide areas. Therefore, there existed a problem of generating an unperceiving zone such as the areas 202, 203 and 204 in the figure. In addition, even if a base station apparatus is equipped with an antenna array and/or an adaptive antenna, the base station apparatus is not equipped with the function for capturing the state of propagating the transmission waves of its own station. Therefore, the process for adjusting the directivity of array in line with the setting environment, or for optimizing the adaptation control in complying with the setting environment, in advance, should be required.

On the contrary, Fig. 3 shows the case in which the base station apparatus 101 equipped with the adaptive antenna apparatus according to the present invention is installed at the same environment as the above. In this case, as shown in Fig. 3, it enables to receive the reflection components of its own station caused by the surrounding walls and/or barriers as interference at the base station and to control the transmission directivity of its own station so as to minimize the reflection components. Control of directivity can be realized by controlling the amplitude and phase of the signal transmitted to each of antenna elements comprising the antenna array, as is the case with the conventional antenna apparatus.

This enables to eliminate unnecessary reflection near the base station and to automatically make the optimum directivity at the setting environment at the base station so as to effectively propagate the radio signals. Accordingly, as shown in the area 201 in Fig. 3, it is made available to provide services with the areas 202, 203 and 204 (refer to Fig.2) which were unperceiving at the conventional base station 101.

Fig.4 shows a function block of other embodiment of the adaptive antenna apparatus according to the present invention, and the parts equivalent to those in Fig. 1 are shown by the same codes. In Fig.1, an interference processing part 7 is provided for all antenna elements, and signals are processed in a time division mode by alternatively extracting the antenna elements at the interference radio switch part 18. However, in the present invention the interference processing parts (in the figure, the interference processing part 2 for the antenna 9, and the interference processing part 19 for the antenna 11) are provided for each of antenna elements, and the signal received from each antenna is processed.

The interference processing part 7 as shown in Fig.4 operates in the same way as explained in Fig. 1 except for having no radio switch part. The interference processing part 19 also operates in the same way as interference processing part 7. The interference processing part 7 processes the downlink signal received at the antenna 9, and the interference processing part 19 processes the downlink signal received at the antenna 11. And the information of the phase and amplitude detected by each antenna is fed back to the signal processing part 4 to perform the directivity control of the signal.

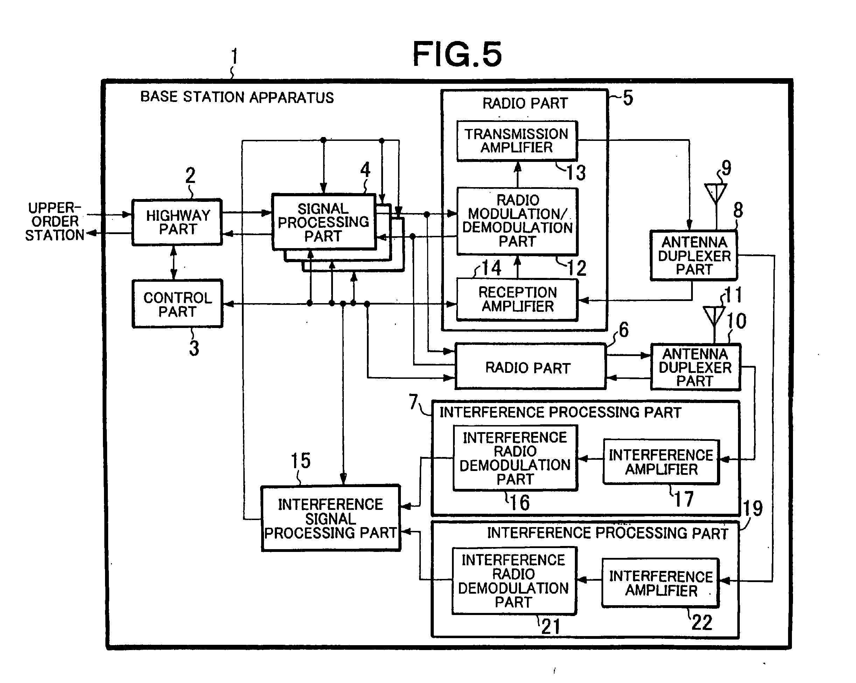

Fig. 5 is a figure for showing a function block of another embodiment of the adaptive antenna apparatus according to the present invention, and the parts equivalent to those as shown in Figs. 1 and 4 are shown by the same symbols. Instead of giving the interference signal processing parts to each of the interference processing parts in Fig. 2, the interference signal processing part 15 common to all interference processing parts is provided, and the downlink reception signal from all antenna elements is processed in this example.

Each of interference processing parts 7 and 19 as shown in Fig. 5 operates in the same way as the interference processing part as shown in Fig.4, except for having no exclusive interference signal processing parts. The interference signal processing 15 has a function for counting the phase and amplitude of each signal through input of the demodulation signals from all interference processing parts and feeding back the result to the signal processing part.

Since the base station apparatus in the Frequency Division Duplex (FDD) System is exemplified in said embodiment, the apparatus comprises the antenna duplexer parts 8 and 10. However, it is essentially also available to adopt the Time Division Duplex System in the technology of this present invention. However, in this case, it is available to eliminate each antenna duplexer part or replace it by a general band-pass filter.

In addition, the present invention is not limited to the embodiments typically exemplified here, and a person skilled in the art can transform and/or change to various modes without departing from the scope of the invention on a basis of the descriptions of the claims. And these inventions belong to the claims according to the present invention.

### Industrial Applicability

The adaptive antenna apparatus according to the present invention described above is adapted for use in a cellular mobile communications system, and more particularly, to a base station apparatus in a cellular communication system using a CDMA system.

## Claims

1. An adaptive antenna transmission apparatus transmitting a transmission signal by a plurality of antenna elements (9, 11) constituting an adaptive antenna, **characterized by** comprising:
an interference processing means (7) for extracting interference wave components of the transmission signals received by each of the antenna elements (9, 11); and
a control means for controlling a transmission directivity formed by the plurality of antenna elements (9, 11) based on each of the interference wave components.

2. An adaptive antenna apparatus according to claim 1, wherein said control means comprises a signal processing means (4) for controlling amplitude and phase of each of the transmission signals corresponding to each of the antenna elements (9, 11) based on each of the interference wave components.

3. An adaptive antenna apparatus according to claim 2, wherein said interference processing means (7) comprises an interference processing part (15) for detecting the amplitude and phase of each of the interference wave components, and said signal processing means (4) controls the amplitude and phase of the each of the transmission signals so as to minimize each of the interference wave components detected by the interference processing part (15).

4. An adaptive antenna apparatus according to claims 2 or 3, wherein said interference processing means (7) is provided in common with the plurality of antenna elements (9, 11), and performs detection process of the amplitude and phase of each of the interference wave components in a time division mode.

5. An adaptive antenna apparatus according to claims 2 or 3, wherein said interference processing means (7, 19) is provided with the each of antenna elements (9, 11) individually.

6. An adaptive antenna apparatus according to claim 3, wherein said interference processing means (7, 19) comprises a radio part (16, 17, 21, 22) for radio amplification and demodulation of each of the interference wave components,
said radio part (16, 17, 21, 22) is provided with each of the antenna elements (9, 11) individually,
said interference processing part (15) detects the amplitude and phase of each of the interference wave components based on a demodulation output from the radio part (16, 17, 21, 22), and
said interference processing part (15) is provided in common with the plurality of antenna elements (9, 11).

7. A base station apparatus in a cellular communication system using an adaptive antenna transmission according to any one of claims 1 to 6.

## Patentansprüche

1. Adaptivantennenübertragungsvorrichtung, die ein Übertragungssignal durch eine Anzahl von Antennenelementen (9, 11) überträgt, die eine Adaptivantenne bilden, **gekennzeichnet durch**:
eine Interferenzverarbeitungseinrichtung (7) zum Extrahieren von Interferenzwellenkomponenten der Übertragungssignale, die von jedem der Antennenelemente (9, 11) empfangen werden, und
eine Steuereinrichtung zum Steuern einer Übertragungsdirektivität, die **durch** die Anzahl von Antennenelementen (9, 11) gebildet wird, basierend auf jeder der Interferenzwellenkomponenten.

2. Adaptivantennenvorrichtung nach Anspruch 1, wobei die Steuereinrichtung eine Signalverarbeitungseinrichtung (4) aufweist, zum Steuern von Amplitude und Phase jedes der Übertragungssignale entsprechend jedem der Antennenelemente (9, 11) basierend auf jeder der Interferenzwellenkomponenten.

3. Adaptivantennenvorrichtung nach Anspruch 2, wobei die Interferenzverabeitungseinrichtung (7) einen Interferenzverarbeitungsteil (15) aufweist zur Erfasssung der Amplitude und der Phase jeder der Interferenzwellenkomponenten und wobei die Signalverarbeitungseinrichtung (4) die Amplitude und die Phase jedes der Übertragungssignale so steuert, um jede der Interferenzwellenkomponenten, die durch den Interferenzverarbeitungsteil (15) erfasst wurden, zu minimieren.

4. Adaptivantennenvorrichtung nach Anspruch 2 oder 3, wobei die Interferenzverarbeitungseinrichtung (7) gemeinsam für die Anzahl von Antennenelementen (9, 11) vorgesehen ist und den Erfassungsprozess für die Amplitude und die Phase jeder der Interferenzwellenkomponenten in einem Zeitteilungsmodus durchführt.

5. Adaptivantennenvorrichtung nach Anspruch 2 oder 3, wobei die Interferenzverarbeitungseinrichtung (7, 19) individuell mit jedem der Antennenelemente (9, 11) vorgesehen ist.

6. Adaptivantennenvorrichtung nach Anspruch 3, wobei die Interferenzverarbeitungseinrichtung (7, 19) einen Funkteil (16, 17, 21, 22) für Funkverstärkung und Demodulation jeder der Interferenzwellenkomponenten aufweist,
wobei der Funkteil (16, 17, 21, 22) für jedes der Antennenelemente (9, 11) individuell vorgesehen ist,
wobei der Interferenzverarbeitungsteil (15) die Amplitude und die Phase jeder der Interferenzwellenkomponenten basierend auf einer Demodulationsausgabe von dem Funkteil (16, 17, 21, 22) erfasst und
der Interferenzverarbeitungsteil (15) gemeinsam für die Anzahl von Antennenelementen (9, 11) vorgesehen ist.

7. Basisstationsvorrichtung in einem zellularen Kommunikationssystem, das eine Adaptivantennenübertragung gemäß einem der Ansprüche 1 bis 6 verwendet.

## Revendications

1. Appareil de transmission à antenne adaptative transmettant un signal de transmission par une pluralité d'éléments d'antenne (9, 11) constituant une antenne adaptative, **caractérisé en ce qu'**il comprend :
un moyen de traitement d'interférence (7) pour extraire des composantes d'onde d'interférence des signaux de transmission reçus par chacun des éléments d'antenne (9, 11) ; et
un moyen de commande pour commander une directivité de transmission formée par la pluralité d'éléments d'antenne (9, 11) en se basant sur chacune des composantes d'onde d'interférence.

2. Appareil à antenne adaptative selon la revendication 1, dans lequel ledit moyen de commande comprend un moyen de traitement de signal (4) pour commander l'amplitude et la phase de chacun des signaux de transmission correspondant à chacun des éléments d'antenne (9, 11) en se basant sur chacune des composantes d'onde d'interférence.

3. Appareil à antenne adaptative selon la revendication 2, dans lequel ledit moyen d'interférence (7) comprend une partie de traitement d'interférence (15) permettant de détecter l'amplitude et la phase de chacune des composantes d'onde d'interférence, et ledit moyen de traitement de signal (4) commande l'amplitude et la phase de chacun des signaux de transmission de façon à minimiser chacune des composantes d'onde d'interférence détectées par la partie de traitement d'interférence (15).

4. Appareil à antenne adaptative selon les revendications 2 ou 3, dans lequel ledit moyen de traitement d'interférence (7) est fourni en commun avec la pluralité d'éléments d'antenne (9, 11), et réalise un procédé de détection de l'amplitude et de la phase de chacune des composantes d'onde d'interférence dans un mode de répartition dans le temps.

5. Appareil à antenne adaptative selon les revendications 2 ou 3, dans lequel ledit moyen de traitement d'interférence (7, 19) est pourvu de chacun des éléments d'antenne (9, 11) individuellement.

6. Appareil à antenne adaptative selon la revendication 3, dans lequel ledit moyen de traitement d'interférence (7, 19) comprend une partie radio (16, 17, 21, 22) pour une amplification et démodulation radio de chacune des composantes d'onde d'interférence,
ladite partie radio (16, 17, 21, 22) est pourvue de chacun des éléments d'antenne (9, 11) individuellement,
ladite partie de traitement d'interférence (15) détecte l'amplitude et la phase de chacune des composantes d'onde d'interférence en se basant sur une sortie de démodulation provenant de la partie radio (16, 17, 21, 22), et
ladite partie de traitement d'interférence (15) est fournie en commun avec la pluralité d'éléments d'antenne (9, 11).

7. Appareil de station de base dans un système de communication cellulaire utilisant une transmission à antenne adaptative selon l'une quelconque des revendications 1 à 6.
